# NEW EUROPEAN PATENT SPECIFICATION

(11) **EP 2 934 160 B2**
(45) Date of publication and mention of the opposition decision: **08.01.2025**
(45) Mention of the grant of the patent: 14.11.2018
(21) Application number: 13817809.0
(22) Date of filing: 16.12.2013
(51) Int. Cl.: A23L 33/00

(54) **LOW VISCOSITY, HIGH CALORIC DENSITY ORAL NUTRITIONAL COMPOSITION AND RELATED METHODS**
NIEDRIGVISKÖSE ORALE ERNÄHRUNGSZUSAMMENSETZUNG VON HOHER KALORISCHER DICHTE UND ZUGEHÖRIGE VERFAHREN
COMPOSITION NUTRITIVE ORALE À FAIBLE VISCOSITÉ ET À HAUTE DENSITÉ CALORIQUE ET PROCÉDÉS ASSOCIÉS

(30) Priority: 18.12.2012 US 201261738785 P
(43) Date of publication of application: 28.10.2015
(73) Proprietor: ABBOTT LABORATORIES, Abbott Park, IL 60064-3500 (US)
(72) Inventor: CHAPMAN, Timothy, Grove City, OH 43123 (US); DEWILLE, Normanella, Columbus, OH 43220 (US); LOWE, Kelley, Powell, OH 43065 (US); MAZER, Terrence, New Albany, OH 43054 (US)
(74) Representative: Boult Wade Tennant LLP
(86) International application number: PCT/US2013/075412
(87) International publication number: WO 2014/099795

(56) References cited:
- WO-A1-2009/072885
- US-A1- 2001 043 958
- N.N.: "Ensure TwoCal - 640063 / 100P9221A1120 / 0614707 / Erdbeergeschmack, 200 ml Tetra", PREISLISTE ABBOTT PRODUKTE, 31 December 2010 (2010-12-31), pages 1 - 1, XP055353048, Retrieved from the Internet <URL:http://www.dolp-medical.de/fileadmin/user_upload/downloads/preisliste_abbott.pdf> [retrieved on 20170309]
- ANONYMOUS: "Wayback machine date stamp for: Abbott Klinische Ernährung - Ensure TwoCal - Analysedaten", 13 November 2012 (2012-11-13), pages 1 - 1, XP055353101, Retrieved from the Internet <URL:http://web.archive.org/web/20121113121403/http://www.abbott.de/Medizinische_Ernaehrung/e4/e8/e1729/index_de.html> [retrieved on 20170309]
- DATABASE GNPD [online] MINTEL; 1 December 2008 (2008-12-01), "Nutritional Drink (Abbott Ensure TwoCal)", XP002722139, Database accession no. 1012294
- ANONYMOUS: "Ensure TwoCal", 1 January 2008 (2008-01-01), pages 1 - 2, XP055109248, Retrieved from the Internet <URL:http://www.abbott.de/Medizinische_Ernaehrung/e4/e1228/e1766/281727_Ens_TwoCal_Analyse_de.pdf> [retrieved on 20140321]

## Description

### CROSS-REFERENCE TO RELATED APPLICATIONS

### TECHNICAL FIELD

Disclosed embodiments are in the field of nutritional compositions and more particularly in the field of nutritional compositions displaying high caloric density and low viscosity, and methods for making same.

### BACKGROUND

Organoleptic characteristics such as mouthfeel play an important role in the selection of liquid nutritional compositions by consumers. Nutritional compositions having characteristics such as high protein content, high caloric density, or both may be desirable from a nutritional or medical standpoint, but often display high viscosity. Highly viscous nutritional compositions are often perceived as having an unpleasant mouthfeel and as generally undesirable, making the formulation of high caloric density liquid nutritional compositions in a fashion that is palatable to a wide variety of consumers very difficult.

WO 2009/072885 relates to high energy and high protein liquid nutrition enteral compositions that contain micellar casein and caseinate and optimally, a small amount of whey.

### SUMMARY

Provided herein are nutritional compositions that have a relatively low viscosity while having a high caloric density. Also provided are related methods for formulating the nutritional compositions. In certain embodiments, the nutritional compositions comprise non-micellar milk protein and lecithin. Additionally, the nutritional compositions provide at least 8 grams of protein per 100 mL of composition while achieving a low viscosity *(i.e.,* 45- 140 cps). In certain embodiments, the nutritional compositions have a high caloric density *(i.e.,* 2-3 kilocalories per mL).

In SI units, a viscosity value of 1 cps corresponds to 1 mPa·s, and 1 kCal corresponds to 4,184 kJ.

In a first embodiment, a low viscosity, high caloric density liquid nutritional composition is provided. The nutritional composition comprises protein in amount of between 8 to 27 grams per 100 mL of the nutritional composition, fat in an amount of between 0 and 17 grams per 100 mL of the nutritional composition, and at least one emulsifier selected from the group consisting of: lecithin, monoglycerides, diglycerides, polyglycerol esters, milk phospholipids, citric acid esters, datem and emulsifiers with a hydrophilic-lipophilic balance between 5 and 16. The protein comprises non-micellar milk protein isolate or non-micellar milk protein concentrate and a partially hydrolyzed caseinate. The protein comprises 0-25% by weight of protein from a partially hydrolysed caseinate; 25-50% by weight of protein selected from the group consisting of whey protein, soy protein, pea protein, potato protein and combinations thereof; and 50 to 75% by weight of non-micellar milk protein isolate, non-micellar milk protein concentrate or a combination thereof. Additionally, the nutritional composition has a viscosity of between 45 and 140 cps at 22°C, a caloric density of 200 to 300 kcal per 100 mL of the nutritional composition, and the total combined amount of fat and protein is 8-27 grams per 100 mL of the nutritional composition.

In a second embodiment, a low viscosity, high caloric density liquid nutritional composition is provided. The nutritional composition comprises protein in amount of between 8 to 27 grams per 100 mL of the nutritional composition; fat in an amount of between 0 and 17 grams per 100 mL of the nutritional composition; an anti-foaming agent selected from the group consisting of simethicone, dimethylpolysiloxane, silicone dioxide, lecithin, milk phospholipid, and combinations thereof; and a chelating agent selected from the group consisting of divalent citrates, divalent phosphates, and combinations thereof. The chelating agent is present in an amount of 0.3 weight % to 0.5 weight %. The nutritional composition has a viscosity of between 45 and 140 cps at 22°C. The protein comprises 50-75% by weight of non-micellar milk protein isolate, non-micellar milk protein concentrate or a combination thereof; and partially hydrolysed caseinate in an amount of up to 50% by weight of partially hydrolysed caseinate, or up to 25% by weight of partially hydrolysed caseinate and 0-25% by weight of at least one protein selected from the group consisting of: micellar milk protein, non-hydrolyzed caseinate, soy, pea, whey, rice, corn, meat, fish, egg albumen, potato, canola, algal protein, mycoprotein and combinations thereof. In addition, the total combined amount of fat and protein is 8-27 grams per 100 mL of the nutritional composition.

In a third embodiment, a method for the manufacture of a stable, low viscosity, high caloric density liquid nutritional composition is provided. The steps of this method of manufacture (as described herein) can also be useful for formulating liquid nutritional compositions according to the first and second embodiments disclosed herein. The method according to the third embodiment comprises the steps of combining fat and at least one emulsifier selected from the group consisting of lecithin, monoglycerides, diglycerides, polyglycerol esters, milk phospholipids, citric acid esters, datem and emulsifiers with a hydrophilic-lipophilic balance between 5 and 16, to make a first mixture, and wherein the first mixture is free of water. Then, a portion of the first mixture (*i.e*., 5 -20% by weight) is combined with water in a ratio of 1:110 to 1:20 to make a second mixture. Non-micellar milk protein and partially hydrolyzed caseinate are added to the second mixture to make a third mixture. The non-micellar milk protein is selected from the group consisting of non-micellar milk protein isolate, non-micellar milk protein concentrate, and combinations thereof. The third mixture is combined with the remainder of the first mixture to make a fourth mixture. The fourth mixture is then mixed with one or more of carbohydrates, vitamins and minerals to produce a liquid nutritional composition having a viscosity of 45-140 cps, 8 to 27 grams of protein per 100 mL, 0-17 grams of fat per 100 mL, and a total amount of protein and fat of 8-27 grams per 100 mL, as well as other additional constituents of the liquid nutritional composition, including, but not limited to flavorings, colorants, Ca-HMB, Lutein, EGCG, Plum Extract, Beta Alanine and others.

### DETAILED DESCRIPTION

Provided herein are liquid nutritional compositions that have a relatively low viscosity while having a high caloric density. Also provided are methods for formulating the liquid nutritional compositions. In certain embodiments, the liquid nutritional compositions comprise non-micellar milk protein and lecithin. Additionally, the liquid nutritional compositions provide at least 8g of protein per 100 mL of composition while achieving a low viscosity (*i.e*., 45-140 cps). In certain embodiments, the liquid nutritional compositions have a high caloric density (*i.e*., 2-3 kilocalories per mL).

In a first embodiment, a low viscosity, high caloric density liquid nutritional composition is provided. The nutritional composition comprises protein in amount of between 8 to 27 grams per 100 mL of the nutritional composition, fat in an amount of between 0 and 17 grams per 100 mL of the nutritional composition, and at least one emulsifier selected from the group consisting of lecithin, monoglycerides, diglycerides, polyglycerol esters, milk phospholipids, citric acid esters, datem, emulsifiers with a hydrophilic-lipophilic balance between 5 and 16, and combinations thereof. The protein comprises non-micellar milk protein isolate or non-micellar milk protein concentrate and a partially hydrolyzed caseinate. The protein comprises 0-25% by weight of protein from a partially hydrolysed caseinate; 20-50% by weight of protein selected from the group consisting of whey protein, soy protein, pea protein, potato protein and combinations thereof; and 50 to 75% by weight of non-micellar milk protein isolate, non-micellar milk protein concentrate or a combination thereof. Additionally, the nutritional composition has a viscosity of between 45 and 140 cps at 22°C, a caloric density of 200 to 300 kcal per 100 mL of the nutritional composition, and the total combined amount of fat and protein is 8-27 grams per 100 mL of the nutritional composition.

In a second embodiment, a low viscosity, high caloric density liquid nutritional composition is provided. The liquid nutritional composition comprises protein in amount of between 8 to 27 grams per 100 mL of the nutritional supplement; fat in an amount of between 0 and 17 grams per 100 mL of the liquid nutritional supplement; an anti-foaming agent selected from the group consisting of simethicone, dimethylpolysiloxane, silicone dioxide, lecithin, milk phospholipid, and combinations thereof; and a chelating agent selected from the group consisting of divalent citrates, divalent phosphates, and combinations thereof. The chelating agent is present in an amount of 0.3 weight % to 0.5 weight %. The nutritional composition has a viscosity of between 45 and 140 cps at 22°C. The protein comprises 50-75% by weight of non-micellar milk protein isolate, non-micellar milk protein concentrate or a combination thereof; and partially hydrolysed caseinate in an amount of up to 50% by weight of partially hydrolysed caseinate, or up to 25% by weight of partially hydrolysed caseinate and 0-25% by weight of at least one protein selected from the group consisting of: micellar milk protein, non-hydrolyzed caseinate, soy, pea, whey, rice, corn, meat, fish, egg albumen, potato, canola, algal protein, mycoprotein and combinations thereof. In addition, the total combined amount of fat and protein is 8-27 grams per 100 mL of the liquid nutritional composition.

In a third embodiment, a method for the manufacture of a stable, low viscosity, high caloric density liquid nutritional composition is provided. The steps of this method of manufacture (as described herein) can also be useful for formulating liquid nutritional compositions according to the first and second embodiments disclosed herein. The method according to the third embodiment comprises the steps of combining fat and at least one emulsifier selected from the group consisting of lecithin, monoglycerides, diglycerides, polyglycerol esters, milk phospholipids, citric acid esters, datem, emulsifiers with a hydrophilic-lipophilic balance between 5 and 16, and combinations thereof, to make a first mixture, and wherein the first mixture is free of water. Then, a portion of the first mixture *(i.e.,* 5 -20% by weight) is combined with water in a ratio of 1:20 to 1:110 to make a second mixture. Non-micellar milk protein and partially hydrolyzed caseinate are added to the second mixture to make a third mixture. The non-micellar milk protein is selected from the group consisting of non-micellar milk protein isolate, non-micellar milk protein concentrate, and combinations thereof. The third mixture is combined with the remainder of the first mixture to make a fourth mixture. The fourth mixture is then mixed with one or more of carbohydrates, vitamins and minerals to produce a liquid nutritional composition having a viscosity of 45-140 cps, 8 to 27 grams of protein per 100 mL, 0-17 grams of fat per 100 mL, and a total amount of protein and fat of 8-27 grams per 100 mL, as well as other additional constituents of the liquid nutritional composition, including, but not limited to flavorings, colorants, Ca-HMB, Lutein, EGCG, Plum Extract, Beta Alanine and others.

Disclosed embodiments provide liquid nutritional compositions with high caloric density and low viscosity. High caloric density as used herein refers to a calorie content that is at a level of 200-300 kcal per 100 mL of the nutritional composition. Low viscosity as used herein refers to a viscosity of 45-140 cps (at 22°C).

It should be understood that when discussing the liquid nutritional compositions and compositions herein, that the discussion is equally applicable to nutritional compositions that can be made according to the disclosed methods. In other words, in certain embodiments, the disclosed methods can be viewed as methods for preparing a nutritional composition according to the first embodiment disclosed herein or a nutritional composition according to the second embodiment disclosed herein. However, it should also be understood that the disclosed methods of the third embodiment can also be used to prepare nutritional compositions that vary in one or more ways from the nutritional compositions of the first and second embodiments.

As used herein, the terms "stable," "shelf stable" and "stabilized," unless otherwise specified, refers to a liquid nutritional composition that remains commercially stable after being packaged and then stored at 18-24°C for at least 3 months, including from 9 months to 18 months, including from 9 months to 12 months and also including from 12 months to 18 months. Additionally, in certain embodiments, the term refers to a liquid nutritional composition which has a single phase after shaking for a brief period (*i.e*., 5 to 10 sec.). In certain embodiments, the liquid nutritional compositions disclosed herein (according to the first and second embodiments) have a relatively high protein concentration (*i.e*. 8-27 grams per 100 mL of nutritional composition), while retaining a shelf stability generally only achieved by nutritional compositions having lower protein concentrations.

In certain embodiments according to the first, second and third embodiments disclosed herein, the liquid nutritional compositions are administered (or consumed) orally as needed to provide the desired level of nutrition. In certain of these embodiments, the nutritional compositions are administered (or consumed) in the form of one to two servings daily or in one or two or more divided doses daily (*e.g.*, when in liquid form serving sizes typically range from about 100 to about 300 mL, including from about 125 to about 250 mL, including from about 190 mL to about 240 mL and also including 8 fluid ounces and 10 fluid ounces). Various calorie contents may be associated with each serving of the nutritional compositions according to the first, second and third embodiments disclosed herein, typically from 200 to 750 Kcal, including 200 to 400 Kcal; 250 to 350 Kcal; or 200 to 300 Kcal. In certain embodiments, according to the first, second and third embodiments, the serving size of the nutritional compositions are in the range of 3-5 ounces, including 4 ounces and provide from 240 to 350 calories. Generally as used herein, a serving may be construed as any amount which is intended to be consumed in one sitting or within one hour or less.

As previously mentioned, the liquid nutritional compositions according to the first, second and third embodiments provided herein have a relatively low viscosity, *i.e*., between 45 and 140 cps. In certain other embodiments according to the first, second and third embodiments, the liquid nutritional compositions have a viscosity of between 45 and 125 cps, including a viscosity of between 45 and 90 cps, and including a viscosity of between 45 and 75 cps including a viscosity of between 50 and 70 cps or in other embodiments a viscosity of between 50 and 65 cps. In certain embodiments, according to the first, second and third embodiments, the liquid nutritional compositions have a viscosity of between 90 and 125 cps.

As previously discussed, the liquid nutritional compositions within the limits according to the first, second and third embodiment include between 8 and 27 grams of the liquid nutritional compositions, including between 8 and 12 grams of protein per 100 mL of the liquid nutritional compositions with the protein comprising (i) non-micellar milk protein isolate, non-micellar milk protein concentrate or combinations thereof, and (ii) partially hydrolyzed caseinate. The term non-micellar milk protein refers to milk protein which is no longer native protein; the term likewise refers to milk protein which has been denatured. While in its non-denatured state, proteins in milk naturally form micelles in an aqueous environment. Denaturing results in a breakdown of a portion of these naturally occurring protein micelles present in milk. The denaturing of the milk proteins can be achieved according to one or more treatments such as hydrolysis, heat treatment, reaction with soluble divalent minerals, and combinations thereof. In other embodiments, the denaturing of the milk proteins is achieved through homogenization by pressurization at 4000 psig.

The term milk protein concentrate is generally used to refer to a milk protein containing product that has had a considerable amount of the inherent water from ordinary milk removed and also has had inherent fat from the ordinary milk removed. The term milk protein isolate is generally used to refer to a type of milk-protein containing product that has not only had a considerable amount of the inherent water and inherent fat from ordinary milk removed but also a certain amount of inherent lactose removed. In most instances, milk protein isolates can be considered to be a type of further purified milk protein concentrate.

As used herein, the phrase milk protein isolate should be understood to mean a source of milk protein that comprises milk that has been concentrated (*i.e*., to remove water and fat) and has also had a portion of its lactose content removed. Generally, commercially available milk protein isolates contain about 85-90 weight % protein (or more), about 2-5 weight % lactose, minimal fat (*i.e*., 1-3%) and about 5-6 weight % water. As used herein, the phrase milk protein concentrate should be understood to mean a source of milk protein that comprises milk that has had a considerable amount of water and a portion of the inherent fat removed. Generally, commercially available milk protein concentrates contain about 40 to less than 85 weight % protein (sometimes less), minimal fat and about a somewhat higher amount of lactose than milk protein isolates. Certain manufacturers may use the term milk protein concentrate to refer to milk-based protein products even if they contain at least 85 weight % protein and such products should be considered to be within the scope of the term milk protein concentrate as that term is used herein.

When non-micellar milk protein concentrate is utilized in the liquid nutritional compositions according to the first, second and third embodiments disclosed herein, the non-micellar milk protein concentrate may be provided by one or more sources. In certain embodiments and within the limits of the respective embodiments according to the first, second and third embodiments disclosed herein, non-micellar milk protein concentrate comprises 0-90 weight % (i.e., 0 to 90 weight %), including up to 80 weight % (i.e., 0 to 80 weight %) including up to 75 weight % (i.e., 0 to 75 weight %), including up to 50 weight % (i.e., 0 to 50 weight %) of the total protein. Various commercial sources of non-micellar milk protein concentrate suitable for use in the liquid nutritional compositions according to the first, second and third embodiments are available from Aria Foods Inc., USA 645 Martinsville Road, 3rd floor Basking Ridge, NJ 07920; FrieslandCampina DMV 1285 Rudy Street Onalaska, Wisconsin, 54650; Kerry Ingredients & Flavours 3330 Millington Road Beloit, WI 53511; and Fonterra USA Inc. Columbia Centre III, Ste. 700, 9525 W. Bryn Mawr Ave. Rosemont, IL 60018.

When non-micellar milk protein isolate is utilized in the liquid nutritional compositions according to the first, second and third embodiments disclosed herein, the non-micellar milk protein isolate may be provided by one or more sources. In certain embodiments and within the limits of the respective embodiments according to the first, second and third embodiments disclosed herein, non-micellar milk protein isolate comprises 0-90 weight % (i.e., 0 to 90 weight %), including up to 80 weight % (i.e., 0 to 80 weight %) including up to 75 weight % (i.e., 0 to 75 weight %), including up to 50 weight % (i.e., 0 to 50 weight %) of the total protein. Various commercial sources of non-micellar milk protein isolate suitable for use in the liquid nutritional compositions according to the first, second and third embodiments are available from, Arla Foods Inc., USA 645 Martinsville Road, 3rd floor Basking Ridge, NJ 07920; FrieslandCampina DMV 1285 Rudy Street Onalaska, Wisconsin, 54650; Kerry Ingredients & Flavours 3330 Millington Road Beloit, WI 53511; and Fonterra USA Inc. Columbia Centre III, Ste. 700, 9525 W. Bryn Mawr Ave. Rosemont, IL 60018.

In certain embodiments according to the first, second and third embodiments disclosed herein, the non-micellar milk protein component comprises a combination of non-micellar milk protein concentrate and non-micellar milk protein isolate. Various relative amounts of each may be utilized ranging from 0-100% of each, including amounts such as 50/50 isolate/concentrate, 25/75 isolate/concentrate, 75/25 isolate/concentrate, 40/60 isolate/concentrate and 60/40 isolate/concentrate, all based upon the total amount of non-micellar milk protein. Additionally, in certain other embodiments, according to the first, second and third embodiments the protein comprises some amount of micellar milk protein. The micellar milk protein is present in an amount in accordance with the amounts of nonmicellar milk protein and hydrolyzed casein. Further, when present in the disclosed embodiments, micellar milk protein is a minor component (*i.e*., less than 25% by weight of protein).

As previously discussed, according to the first, second and third embodiments, the protein of the liquid nutritional compositions includes a partially hydrolyzed caseinate. As used herein, the term "partially hydrolyzed caseinate" refers to a caseinate in which a portion of the protein has been hydrolyzed, (*e.g.*, 0.5 to 10% hydrolyzed, 0.5 to 20%, 0.5 to 30%, 0.5 to 40%, 0.5 to 50%, 0.5 to 60%, 0.5 to 70%, 0.5 to 80%, and 0.5 to 90% hydrolyzed). Another way of referring to the extent of hydrolyzation in a partially hydrolyzed caseinate is by Degree of Hydrolzyzation (DH). A DH value of, for example, 30 refers to casein in which 30% of the total casein is hydrolyzed casein. When used in the disclosed liquid nutritional compositions, the partially hydrolyzed caseinate comprises 10-60 weight % (*i.e.,* 10 to 60 weight %), including 10 to 50 weight %; including 10 to 40 weight %, including 10 to 30 weight %, including 20 to 25 weight % of the total protein. When present in the disclosed embodiments, the partially hydrolyzed caseinate may include sodium caseinate, potassium caseinate, magnesium caseinate, calcium caseinate and combinations thereof. Further, the partially hydrolyzed caseinates useful in the disclosed embodiments may be achieved through reaction of the caseinate with soluble divalent minerals. Examples of soluble divalent minerals useful according to the disclosed embodiments include Ca2⁺, and Mg²⁺ among others. In addition to the protein sources discussed above (*i.e*., non-micellar milk protein concentrate, non-micellar milk protein isolate, and hydrolyzed casein).

In certain embodiments, the liquid nutritional compositions according to the first, second and third embodiments disclosed herein may also contain protein from one or more other sources, in an amount or amounts that is in accordance with the guidance on the amounts of non-micellar milk protein concentrate, non-micellar milk protein isolate and partially hydrolyzed caseinate, discussed above. Generally according to the first and second embodiments, the other protein source(s) (when present) will not comprise (in total) more than 25 weight % of the total protein, no more than 20 weight %, no more than 15 weight % or no more than 10 weight %. Suitable and non-limiting examples of additional protein sources include whey from milk, animal products (*e.g*., meat, fish, egg albumen), cereals (*e.g*., rice, corn), vegetable (*e.g*., soy, pea, potato, canola), algal protein, mycoprotein, or combinations thereof. The additional protein sources can also include free amino acids known for use in nutritional compositions, non-limiting examples of which include L-tryptophan, L-glutamine, L-tyrosine, L-methionine, L-cystine, taurine, L-arginine, carnitine, and combinations thereof.

When pea protein is present in nutritional compositions according to the disclosed embodiments, it may be provided as an intact pea protein. Particularly suitable intact pea protein for use in the nutritional compositions of the present disclosure includes intact pea proteins derived from *pisum sativum.* One suitable commercially available intact pea protein for use in the nutritional compositions of the present disclosure is NUTRALYS^{®} F85F pea protein isolate (about 83% by weight intact pea protein) (Roquette Freres, Lestrem France).

When soy protein is utilized in the liquid nutritional compositions disclosed herein, the soy protein may be provided by one or more than one source. Common forms of soy protein include soy protein concentrates and soy protein isolates. When soy protein is utilized in the liquid nutritional compositions disclosed herein, the amount of soy protein that may be utilized in the liquid nutritional compositions is generally up to 25 weight % (i.e., 0 to 25 weight %) of the total protein, in certain embodiments 1-25 weight % of the total protein, 1-15 weight % of the total protein in other embodiments and can be 1-10 weight % of the total protein in yet other embodiments. Preferably, the soy protein is soy protein isolate. Commercial sources of soy protein are well known in the nutrition art, some non-limiting examples of which include soy protein isolates distributed by The Solae Company under the trade designation "Soy Protein Isolate EXP-H0118," "EXP-E-0101, and "Supro Plus 675 and ADM ProFam."

When whey protein is utilized in the liquid nutritional compositions disclosed herein, the whey may be provided by one or more than one source. Common forms of whey protein include whey protein concentrate, whey protein isolate and partially hydrolyzed whey protein. Preferably, the whey protein is present as a whey protein isolate. Various commercial sources of whey protein exist, containing varying concentrations of protein such as about 75 weight % protein (w/w, based on the total weight of the protein source). As previously discussed, when whey protein is utilized in the liquid nutritional compositions disclosed herein, the amount of whey protein utilized in the liquid nutritional compositions is generally up to 25 weight % (i.e., 0 to 25 weight %) of the total protein, in certain embodiments 1-25 weight % of the total protein, 1-15 weight % of the total protein in other embodiments and can be 1-10 weight % of the total protein in yet other embodiments. In certain embodiments, both whey protein and soy protein are used in the liquid nutritional compositions, in these instances, the total combined amount of soy and whey protein used comprises 1-25 weight %.

When carbohydrates are present in embodiments according to the first, second and third embodiments, the carbohydrates may be provided by a single source or by more than one source. The particular amount of carbohydrate present in the liquid nutritional compositions may vary depending upon the desired amount of calories in the nutritional compositions. Carbohydrate concentrations usually fall within the range of 20 weight % to 50 weight % (percentages are weight percentages based upon the total weight of the liquid nutritional compositions) including 20 to 40 weight % and 20 to 30 weight %. The amount of carbohydrates present in the liquid nutritional compositions according to the first, second and third embodiments disclosed herein can also be characterized as a percentage of total calories in the nutritional composition and may vary widely from 5-90%. In certain embodiments according to the first, second and third embodiments disclosed herein, the carbohydrates comprise 10-80%, 20-70%, 30-60%, or 40-55% of the total calories of the liquid nutritional composition.

Various commercial sources of carbohydrates exist and may be utilized in liquid nutritional compositions according to the first, second and third embodiments disclosed herein. Non-limiting examples of suitable carbohydrates or sources thereof for use in the liquid nutritional compositions disclosed herein include maltodextrin, native, hydrolyzed or modified starch or cornstarch, isomaltulose, glucose polymers, corn syrup, corn syrup solids, rice-derived carbohydrates, glucose, fructose, lactose, sucrose, high fructose corn syrup, honey, sugar alcohols (*e.g.*, maltitol, erythritol, sorbitol), slow digesting starches, barley beta glucan, glycerin, sucromalt, inulin and combinations thereof.

In certain embodiments according to the first, second and third embodiments the liquid nutritional compositions include fat or at least one source of fat. As previously discussed, the maximum amount of fat according to certain embodiments of the first and second embodiments is between 0 and 17 grams per 100 mL, including between 0 and 12.5 grams per 100 mL of the liquid nutritional composition. As discussed previously, the amount of fat according to certain embodiments of the first, second and third embodiment is from 0 to 50% of the total calories in the nutritional composition, including 0 to 10%, 0 to 20% and 0 to 40% of the total calories in the nutritional composition. Within these ranges, the particular amount of fat that is present in a nutritional composition according to the first, second and third embodiments disclosed herein may vary depending upon the nutritional needs of the intended user.

Various commercial sources of fat exist and may be utilized in certain embodiments according to the first, second and third embodiments. Non-limiting examples of suitable fats or sources thereof for use in the nutritional compositions disclosed herein include coconut oil, fractionated coconut oil, soy oil, corn oil, olive oil, safflower oil, high oleic safflower oil, MCT oil (medium chain triglycerides), sunflower oil, high oleic sunflower oil, palm and palm kernel oils, palm olein, canola oil, fish oil, cottonseed oils, lecithin, datem, mono and di glycerides, milk phospholipids, polyglycerol esters, citric acid esters and combinations thereof.

As previously mentioned, according to the first and second and in certain embodiments of the third embodiment, in the liquid nutritional compositions the sum of the total amount of protein added to the total amount of fat equals 8-27 grams per 100 mL. For example, if the amount of protein in the nutritional composition is 16 grams per 100 mL, then the corresponding amount of fat must be no more than 11 grams per 100 mL *(i.e.,* 0-11 g/100mL).

Lecithin is the popular and commercial name for a naturally occurring mixture of phosphatides (also called phospholipids or phosphoglycerides), which varies in color from light tan to dark reddish brown and in consistency from a fluid to a plastic solid. Lecithin is the gummy material contained in crude vegetable oils and is generally removed from the oils by degumming. Soybeans are currently the most important source of commercial lecithin and lecithin is the most important by-product of the soy oil processing industry because of its many applications in foods and industrial products, but it should be understood that the present disclosure encompasses the use of lecithins other than soy-sourced lecithin. The three main phosphatides in the complex mixture sold commercially as soy lecithin are phosphatidyl choline, phosphatidyl ethanolamine (popularly called "cephalin"), and phosphatidyl inositols (also called inositol phosphatides). Commercial sources of soy lecithin also typically contain roughly 30-35% unrefined soy oil.

Soy lecithin can be classified into three broad types: unrefined or natural, refined, and chemically modified. Unrefined or natural lecithin comes in six basic varieties, long defined by specifications of the National Soybean Processors Association: plastic or fluid, each either unbleached, bleached, or double bleached. (Because fluid lecithins are easier to handle and dissolve more rapidly in various solvents, only small amounts of plastic grades are now produced.) Refined lecithin (which has had the oil removed using acetone) comes in three basic varieties: custom blended natural, oil free phosphatides (as is or custom blended), and alcohol-fractionated oil-free phosphatides (as is or custom blended). These latter special refined grades, which may contain 60-99.7% phosphatidyl choline, are used mostly for pharmaceutical applications and research. Chemically modified lecithin products, altered through selective chemical treatment, improve lecithin's compatibility to certain systems.

As previously discussed, in certain embodiments according to the first and third embodiments, the liquid nutritional compositions include lecithin. When present, the lecithin may be provided by a single source or by more than one source. In certain embodiments according to the first and third embodiments, lecithin is present in an amount based on the amount of fat per 100 mL of nutritional composition, accordingly, lecithin is present in an amount of between 0.5 and 5% of the fat present in the liquid nutritional composition, including from 0.5 to 2 % based on weight of fat in the nutritional composition. In certain embodiments the amount of lecithin utilized within the liquid nutritional composition can also be based upon the relative amount of fat contained within the liquid nutritional composition, according to the foregoing amounts. Commercial sources of lecithin are available including soy lecithin and sunflower lecithin among others, non-limiting examples include: Natural unbleached lecithin supplied by Solae and acetylated lecithin from ADM Corporation.

In certain other embodiments according to the first and third embodiments, lecithin may be replaced with another emulsifying agent. Emulsifying agents useful in the disclosed embodiments include mono and diglycerides, polyglycerol esters, milk phospholipids, citric acid esters, and datem. Moreover, other emulsifiers useful with the disclosed embodiments will be those emulsifiers with a hydrophilic lipophilic balance (HLB) of between 5 and 16, including but not limited to certain lecithins.

As previously discussed, according to the second embodiment, the liquid nutritional compositions comprise an anti-foaming agent. In certain embodiments according to the first and third embodiments disclosed herein, the liquid nutritional compositions optionally contain an anti-foaming agent. Within the limits of the respective embodiments, non-limiting examples of anti-foaming agents useful for the liquid nutritional compositions disclosed herein include: simethicone, lecithin, milk phospholipid, dimethylpolysiloxane and fumed silicone dioxide. The anti-foaming agent may be present in an amount of between 0.6 and 6% by weight of the nutritional composition.

In certain embodiments according to the second embodiment, the nutritional composition further comprises a chelating agent. Examples of chelating agents useful with the nutritional compositions disclosed herein include monovalent chelating agents and divalent chelating agents. Non-limiting examples of monovalent chelating agents useful with the nutritional compositions disclosed herein include: sodium citrate, potassium citrate, potassium phosphate, sodium phosphate and combinations thereof. In other embodiments disclosed herein, the chelating agents include divalent chelating agents such as divalent citrates and divalent phosphates. More particularly, the divalent citrate may be calcium citrate, magnesium citrate, tri magnesium dicitrate or combinations thereof; and the divalent phosphate may be magnesium phosphate, calcium phosphate, mono-calcium phosphate, di-calcium phosphate, disodium hydrogen phosphate, dipotassium hydrogen phosphate and combinations thereof. When present in the nutritional compositions, the chelating agents are generally present in an amount of 0.3 weight % - 0.5 weight % based on the total weight of the nutritional composition.

The liquid nutritional compositions according to the first, second and third embodiments disclosed herein can have widely varying calorie contents. One way to express the calorie content of a liquid nutritional composition is on a kilocalorie per serving basis. Generally, the liquid nutritional compositions according to the first, second and third embodiments disclosed herein have an amount of calories of 200-1000 kilocalories per 3 to 5 ounce serving. In certain embodiments according to the first, second and third embodiments disclosed herein, the liquid nutritional compositions have a calorie content of 200-750 kilocalorie (kcal) per serving, including 200-450 kcal per serving, including 240-350 kcal per serving.

In certain embodiments according to the first, second and third embodiments disclosed herein, the liquid nutritional compositions contain other ingredients, non-limiting examples of which include preservatives, antioxidants, emulsifying agents, buffers, pharmaceutical actives, additional nutrients, colorants, flavors, thickening agents and stabilizers. In certain embodiments, stabilizers include: octenyl succinic anhydride, gellan gum, alginate, pectin, guar gum, locust bean gum, konjack, carboxymethyl cellulose and microcrystalline cellulose and combinations thereof. Those of skill in the art will recognize that many different gum forms, in addition to those listed above, may be used in the liquid nutritional compositions disclosed herein and still fall within the disclosed embodiments.

In certain embodiments according to the first, second and third embodiments disclosed herein, the liquid nutritional compositions contain vitamins or related nutrients, non-limiting examples of which include vitamin A, vitamin E, vitamin K, thiamine, riboflavin, pyridoxine, vitamin B12, carotenoids (*e.g.*, lutein), niacin, folic acid, pantothenic acid, biotin, vitamin C, choline, inositol, salts, and derivatives thereof, and combinations thereof.

In certain embodiments according to the first, second and third embodiments disclosed herein, the liquid nutritional compositions contain β-hydroxy-β-methylbutyrate (HMB). HMB is a metabolite of the essential amino acid leucine, and has the IUPAC name 3-hydroxy-3-methylbutanoic acid. One useful form of HMB is the calcium salt of HMB, also designated as Ca-HMB, which is most typically the monohydrate calcium salt. The HMB used in the nutritional compositions described herein can come from any source. Calcium HMB monohydrate is commercially available from Technical Sourcing International (TSI) of Salt Lake City, Utah. Note that all of the amounts of HMB described herein are based on use of Ca-HMB monohydrate.

Although calcium monohydrate is the preferred form of HMB for use herein, other suitable sources include HMB as a free acid, a salt, an anhydrous salt, an ester, a lactone, or other product forms that provide a bioavailable form of HMB suitable for administration. Non-limiting examples of suitable salts of HMB for use herein include HMB salts, hydrated or anhydrous, of sodium, potassium, chromium, calcium, or other non-toxic salt forms.

In certain embodiments according to the first, second and third embodiments disclosed herein, the liquid nutritional compositions contain minerals, non-limiting examples of which include calcium, phosphorus, magnesium, iron, zinc, manganese, copper, sodium, potassium, molybdenum, chromium, selenium, chloride, and combinations thereof.

In certain embodiments according to the first, second and third embodiments disclosed herein, the liquid nutritional compositions also optionally include one or more masking agents to reduce or otherwise obscure the development of any residual bitter flavors and after taste in the emulsions over time. Suitable masking agents include natural and artificial sweeteners, sodium sources such as sodium chloride, and hydrocolloids, such as guar gum, xanthan gum, carrageenan, and combinations thereof. The amount of masking agent in the nutritional emulsion may vary depending upon the particular masking agent selected, other ingredients in the formulation, and other formulation or product target variables. Such amounts, however, most typically range from 0.1% to 3 %, including from 0.15% to 3 %, and also including from 0.18% to 2.5%, by weight of the nutritional emulsion.

As previously mentioned, methods for the production of a stable, low viscosity, high caloric density liquid nutritional composition are provided. The steps of this method of manufacture (as described herein) can also be useful for formulating liquid nutritional compositions according to the first and second embodiments disclosed herein. The method of the third embodiment comprises the formulation of a series of mixtures which are then combined in certain amounts in order to achieve the low viscosity, high caloric density liquid nutritional compositions described herein. The method comprises combining fat and at least one emulsifier selected from the group consisting of lecithin, monoglycerides, diglycerides, polyglycerol esters, milk phospholipids, citric acid esters, datem and emulsifiers with a hydrophilic-lipophilic balance between 5 and 16, to make a first mixture, where the lecithin is present in an amount of 0.5 to 4 weight %, based on the total amount of fat, and the first mixture is free of water. A portion (*i.e*., 5 to 20% by weight of the first mixture) of this first mixture is then combined with water in a ratio of 1:20 to 1:110 to make a second mixture; including 5-10% by weight of the first mixture which is combined with water in ratio of 1:110 to 1:55. Once the second mixture is formed, the desired amounts of non-micellar milk protein and partially hydrolyzed caseinate are combined with the second mixture to make a third mixture. The non-micellar milk protein is selected from the group consisting of non-micellar milk protein isolate, non-micellar milk protein concentrate, and combinations thereof and is selected commensurate with the discussion provided above. Likewise, the partially hydrolyzed caseinate is selected according to the relevant discussion provided above. The third mixture is then combined with the remainder of the first mixture to make a fourth mixture. The fourth mixture is then mixed with any additional ingredient to produce a liquid nutritional composition having a viscosity of 45-140 cps (and in certain embodiments, a viscosity of 90-125 cps), 8 to 27 grams of protein per 100 mL, 0 to 17 grams of fat per 100 mL and a total amount of protein and fat of 8-27 grams per 100 mL.

The viscosity values provided herein are measured at 22.5 °C ± 0.5°C, using a Brookfield Model LV Series (Model DV-II) Viscometer, with a #1 spindle installed, operated at 60 rpm (to create a shear rate of about 13 sec-1), utilizing AR&S Method 11.01. The Brookfield Viscometer is a rotational viscometer. It measures the torque required to rotate an immersed spindle (geometry) in a fluid. The spindle is driven by a motor through a calibrated spring; deflection of the spring is indicated by a pointer and dial or a digital display. The viscous drag of the fluid against the spindle is measured by the spring deflection. The measurement range is determined by the rotational speed of the spindle, the size and shape of the spindle, the container the spindle is rotating within and the full scale torque of the calibrated spring. As those skilled in the art will appreciate, while viscosities can be measured under other conditions and according to different methods, modification of one or more test conditions may result in a different viscosity number.

### Examples

The following examples illustrate specific and exemplary embodiments and features of the liquid nutritional compositions disclosed herein. The examples are provided solely for the purposes of illustration and should not be construed as limitations of the present disclosure. Numerous variations over these specific examples are possible without departing from the spirit and scope of the presently disclosed liquid nutritional compositions.

**Example 1:** The table below shows compositional data for a series of liquid nutritional compositions formulated according to embodiments of liquid nutritional compositions described herein. Further, the table shows measured viscosity data for the compositions. The viscosity was measured at room temperature (*i.e.* approximately 22.5 °C) with a Brookfield LV series viscometer with agitation for 10 sec. prior to measurement at 60 rpm.

| **Table 1** | | | | | | |
|---|---|---|---|---|---|---|
| Batch Code | 1401 | 1402 | 1403 | 1404 | 1405 | 1406 |
| Batch Size TY, lbs | 200 | 100 | 100 | 100 | 100 | 100 |
| Finished Product TS | 44.20% | 44.20% | 44.20% | 44.20% | 44.20% | 44.20% |
| Protein¹ | 8.90% | 8.90% | 8.90% | 8.90% | 8.90% | 8.90% |
| Fat | 8.16% | 8.16% | 8.16% | 8.16% | 8.16% | 8.16% |
| Product density, g/ml | 1.14 | 1.14 | 1.14 | 1.14 | 1.14 | 1.14 |
| Calories, per ml | 2.4 | 2.4 | 2.4 | 2.4 | 2.4 | 2.4 |

| **Non-Acid Casein Proteins²** | | | | | | |
|---|---|---|---|---|---|---|
| Sodium Caseinate Hydrolyzed/Alanate 167 | 25% | 25% | 25% | 25% | 25% | 25% |
| Milk Protein Concentrate 4861 (Fonterra) | 75% | 75% | 75% | 75% | 75% | 75% |
| CHECK PROTEIN TOTAL | 100% | 100% | 100% | 100% | 100% | 100% |

| **Fat & Emulsifiers Sources weight% of ingredient** | | | | | | |
|---|---|---|---|---|---|---|
| HO Safflower Oil (HOSO) | 39% | 39% | 39% | 39% | 39% | 39% |
| Canola oil | 39% | 39% | 39% | 39% | 39% | 39% |
| Corn Oil | 20% | 20% | 20% | 20% | 20% | 20% |
| Soy Lecithin | 2% | 2% | 2% | 2% | 2% | 2% |
| CHECK FAT TOTAL | 100% | 100% | 100% | 100% | 100% | 100% |
| Measured Viscosity | 57.8 | 53.6 | 52.3 | 50.6 | 51.8 | 51.9 |
| 1 The percentages of protein represent the weight % of actual protein in the nutritional composition (i.e., grams protein per grams of nutritional composition) and not the weight % of the protein source. | | | | | | |
| 2 The percentages of sodium caseinate and milk protein concentrate that are provided represent the relative percentages of protein provided by the source materials and not the relative weight percentages of the source materials. | | | | | | |

In the exemplary formulations provided in Table 1, the amount of soy lecithin utilized is 2% by weight, based upon the total amount of fat utilized in the liquid nutritional composition. The particular type of soy lecithin used in formulating these compositions was acetylated lecithin (which is lecithin in soy oil). It is to be understood that when using a more refined or processed lecithin such as acetylated lecithin that the amounts may vary allowing for the use of less soy lecithin, while still achieving a low viscosity liquid nutritional composition and falling under the general concepts disclosed herein. The milk protein concentrate utilized in the compositions was Fonterra MPC 4851.

**Example 2:** Table 2 below shows a bill of materials for a liquid nutritional composition according to the disclosed embodiments. The measured viscosity of the formulation presented in Table 2 is 70 cP.

| **Table 2** | |
|---|---|
| INGREDIENTS | APPROXIMATE AMOUNT PER 1000 KG |
| | |
| Deionized corn syrup liquid, DE 25-33/42 Baume | 119.4 kg |
| Liquid maltodextrin DE 18 | 89.0 kg |
| Milk protein isolate 9060/9061 | 68.7 kg |
| High oleic sunflower oil | 48.8 kg |
| Oligofructose (fructo-oligosaccharides) | 24.8 kg |
| Soy oil | 21.7 kg |
| Sucrose | 21.2 kg |
| Sodium caseinate | 16.6 kg |
| Canola oil | 8.1 kg |
| Magnesium chloride | 1.9 kg |
| Lecithin, PCR negative, IP | 1.9 kg |
| Sodium citrate | 1.8 kg |
| Potassium citrate | 1.8 kg |
| Potassium phosphate dibasic | 1.2 kg |
| Magnesium sulfate | 785.0 g |
| Choline chloride | 660.0 g |
| UTM/TM premix 22277 | 530.3 g |
| Ferrous sulfate | 55.8g |
| Zinc sulfate | 36.9 g |
| Citric acid | 32.7 g |
| Manganese sulfate | 13.5 g |
| Cupric sulfate | 6.3 g |
| Sodium molybdate | 296.3 mg |
| Chromium chloride | 243.8 mg |
| Sodium selenate | 194.9 mg |
| Diluent maltodextrin | q.s. |
| Artificial cream flavor | 500.0 g |
| Calcium carbonate | 496.6 g |
| Ascorbic acid | 370.0 g |
| Vitamin premix | 290.1 g |
| Niacinamide | 19.8 g |
| Calcium pantothenate | 16.3 g |
| Pyridoxine hydrochloride | 5.1 g |
| Thiamine hydrochloride | 4.2 g |
| Riboflavin | 4.2 g |
| Folic acid | 521.4 mg |
| Biotin | 81.2 mg |
| Cyanocobalamin | 5.1 mg |
| Diluent dextrose anhydrous | q.s. |
| Artificial vanilla flavor | 200.0 g |
| Taurine | 153.1 g |
| L-carnitine | 153.1 g |
| *Potassium hydroxide | 142.8 g |
| Potassium chloride | 110.5 g |
| Vitamin A palmitate | 7.5 g |
| Vitamin A palmitate | 4.1 g |
| Diluent (corn or sunflower oil) | q.s. |
| Vitamin D3 oil soluble | 850.4 mg |
| Vitamin D3 | 21.3 mg |
| Diluent (MCT oil) | q.s. |
| Potassium iodide | 195.1 mg |
| Phylloquinone | 50.0 mg |
| dl-alpha tocopheryl acetate | As needed |
| Maltodextrin DE18 | As needed |
| *Citric acid | As needed |
| *Potassium hydroxide 40% | As needed |
| Ingredient water | q.s. |

**Example 3:** Table 3 below shows the per serving values for calories, caloric density, protein, total carbohydrates, sugars, and total fat for the formulation detailed in Table 2. The table includes data for both 100 mL serving size and 125 mL serving size.

| **Table 3** | | |
|---|---|---|
| | per 100 mL | per 125 mL serving |
| Calories | 200 | 250 |
| Caloric density | 2.0 | 2.0 |
| Protein, g | 8.4 | 10.5 |
| Total Carbs, g | 20.2 | 25.25 |
| Sugars, g | 4.5 | 5.625 |
| Total Fat, g | 8.9 | 11.125 |

**Example 4:** Table 4 below shows a comparison of two exemplary liquid nutritional compositions according to the disclosed embodiments. The liquid nutritional composition on the left has a volume of 100 mL and the composition on the right has a volume of 125 mL.

| **Table 4** | | |
|---|---|---|
| | **100 mL serving*** | **125 mL serving*** |
| Calories | 240.00 | 300.00 |
| Caloric density | 2.40 | 2.40 |
| Protein, g | 10.00 | 12.50 |
| Total Carbs, g | 32.30 | 40.38 |
| Sugars, g | 10.87 | 11.43 |
| Fiber, g | --- | --- |
| Total Fat, g | 7.87 | 9.84 |
| Sodium, mg | 162.00 | 202.50 |
| Potassium, mg | 233.60 | 292.00 |
| Chloride, mg | 89.60 | 112.00 |
| Calcium, mg | 191.90 | 239.88 |
| Phosphorus, mg | 172.80 | 216.00 |
| Magnesium, mg | 47.97 | 59.96 |
| Iodine, mcg | 35.18 | 43.98 |
| Manganese, mg | 0.80 | 1.00 |
| Copper, mg | 0.29 | 0.36 |
| Zinc, mg | 2.88 | 3.60 |
| Iron, mg | 3.36 | 4.20 |
| Selenium, mcg | 13.27 | 16.59 |
| Chromium, mcg | 11.99 | 14.99 |
| Molybdenum, mcg | 25.59 | 31.99 |
| Vitamin A, mcg RE | 140.72 | 175.90 |
| Beta-carotene, mcg RE | --- | --- |
| Vitamin D, mcg | 3.20 | 4.00 |
| Vitamin E, mg | 3.36 | 4.20 |
| Vitamin K, mcg | 19.19 | 23.99 |
| Thiamin, mg | 0.32 | 0.40 |
| Riboflavin, mg | 0.43 | 0.54 |
| Niacin, mg | 4.16 | 5.20 |
| Pantothenic Acid, mg | 1.76 | 2.20 |
| Vitamin B6, mg | 0.43 | 0.54 |
| Folic Acid, mcg | 63.97 | 79.96 |
| Vitamin B12, mcg | 0.88 | 1.10 |
| Biotin, mcg | 9.59 | 11.99 |
| Vitamin C, mg | 19.19 | 23.99 |
| Choline, mg | 87.95 | 109.94 |
| L-Carnitine,mg | --- | --- |
| Taurine, mg | --- | --- |
| Viscosity, cps | 70 cP | |

While the discussion above refers to the nutritional compositions in liquid form, one of skill in the art will recognize that the nutritional compositions may be prepared as reconstitutable powder and still fall within the disclosed embodiments according to the first, second and third embodiments. A nutritional solid, such as a spray dried nutritional powder or drymixed nutritional powder, may be prepared by any collection of known or otherwise effective technique, suitable for making and formulating a nutritional powder.

For example, when the nutritional powder is a spray dried nutritional powder, the spray drying step may likewise include any spray drying technique that is known for or otherwise suitable for use in the production of nutritional powders. Many different spray drying methods and techniques are known for use in the nutrition field, all of which are suitable for use in the manufacture of the spray dried nutritional powders herein.

One method of preparing the spray dried nutritional powder comprises forming and homogenizing an aqueous slurry or liquid comprising predigested fat, and optionally protein, carbohydrate, and other sources of fat, and then spray drying the slurry or liquid to produce a spray dried nutritional powder. The method may further comprise the step of spray drying, drymixing, or otherwise adding additional nutritional ingredients, including any one or more of the ingredients described herein, to the spray dried nutritional powder.

In certain embodiments according to the first, second and third embodiments disclosed herein, the liquid nutritional compositions, may potentially provide either a primary source or a supplemental source of nutrition to an individual. In this context, a sole source of nutrition is one that can be administered once or multiple times each day to potentially provide an individual with all or substantially all their fat, protein, carbohydrate, mineral, and vitamin needs per day or during the intended period of administration. A supplemental source of nutrition is defined herein as a dietary source that does not provide an individual with a potentially sole source of nutrition.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (*e.g*., A or B) it is intended to mean "A or B or both." When the applicants intend to indicate "only A or B but not both" then the term "only A or B but not both" will be employed. Thus, use of the term "or" herein is the inclusive, and not the exclusive use. *See* Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus, and illustrative examples shown and described.

## Claims

1. A low viscosity, high caloric density liquid nutritional composition comprising:
a) protein in an amount of between 8 to 27 grams per 100 mL of the nutritional composition, the protein comprising (i) non-micellar milk protein isolate, non-micellar milk protein concentrate, or both, and (ii) a partially hydrolyzed caseinate; wherein the protein comprises 0-25% by weight of protein from a partially hydrolyzed caseinate; 25-50% by weight of protein selected from the group consisting of whey protein, soy protein, pea protein, potato protein and combinations thereof; and 50 to 75% by weight of non-micellar milk protein isolate, non-micellar milk protein concentrate or a combination thereof;
b) fat in an amount of between 0 and 17 grams per 100 mL of the nutritional composition; and
c) at least one emulsifier selected from the group consisting of lecithin, monoglycerides, diglycerides, polyglycerol esters, milk phospholipids, citric acid esters, datem and emulsifiers with a hydrophilic-lipophilic balance between 5 and 16, and combinations thereof;
wherein the nutritional composition has a viscosity of between 45 and 140 cps at 22°C, a caloric density of 200 to 300 kcal per 100 mL of the nutritional composition, and wherein the total combined amount of fat and protein is 8-27 grams per 100 mL of the nutritional composition.

2. The low viscosity, high caloric density liquid nutritional composition of claim 1, wherein the composition has a caloric density of 200 to 240 kcal per 100 mL of the nutritional composition.

3. A low viscosity, high caloric density liquid nutritional composition according to claim 1, wherein the non-micellar protein is denatured through one or more of hydrolysis, heat treatment, homogenization, or reaction with soluble divalent minerals.

4. A low viscosity, high caloric density liquid nutritional composition according to any one of claims 1-3, wherein the emulsifier is lecithin and the lecithin is present in an amount of between 0.5 and 5% by weight based on the total amount of fat in the nutritional composition.

5. A low viscosity, high caloric density liquid nutritional composition according to claim 4, wherein the lecithin is selected from the group consisting of soy lecithin, sunflower lecithin, milk phospholipid, or combinations thereof.

6. A low viscosity, high caloric density liquid nutritional composition according to claim 4, wherein the soy lecithin or sunflower lecithin is natural, refined or chemically modified.

7. A low viscosity, high caloric density liquid nutritional composition according to any one of claims 1-3 further comprising a stabilizer selected from the group consisting of octenyl succinic anhydride, gellan gum, alginate, pectin, guar gum, locust bean gum, konjack, carboxymethyl cellulose, microcrystalline cellulose, and combinations thereof.

8. A low viscosity, high caloric density liquid nutritional composition comprising:
a) protein in amount of between 8 to 27 grams per 100 mL of the nutritional composition;
b) fat in an amount of between 0 and 17 grams per 100 mL of the nutritional supplement;
c) an anti-foaming agent selected from the group consisting of simethicone, dimethylpolysiloxane, silicone dioxide, lecithin, milk phospholipid, and combinations thereof; and
d) a chelating agent selected from the group consisting of monovalent chelating agents, divalent chelating agents, and combinations thereof; in an amount of 0.3 weight % to 0.5 weight %;
where the protein comprises: 50-75% by weight of non-micellar milk protein isolate, non-micellar milk protein concentrate or a combination thereof; and
partially hydrolyzed caseinate in an amount of up to 50% by weight of partially hydrolyzed caseinate, or up to 25% by weight of partially hydrolyzed caseinate and 0-25% by weight of at least one protein selected from the group consisting of: micellar milk protein, non-hydrolyzed caseinate, soy, pea, whey, rice, corn, meat, fish, egg albumen, potato, canola, algal protein, mycoprotein and combinations thereof;
wherein the nutritional composition has a viscosity of between 45 and 140 cps at 22°C; wherein the composition has a caloric density of 200 to 300 kcal per 100 mL of the nutritional supplement; and wherein the total combined amount of fat and protein is 8-27 grams per 100 mL of the nutritional composition.

9. A low viscosity, high caloric density liquid nutritional composition according to claim 8, wherein the chelating agent is selected from the group consisting of calcium citrate, magnesium citrate, magnesium phosphate, calcium phosphate, monocalcium phosphate, and combinations thereof.

10. A low viscosity, high caloric density liquid nutritional composition according to claim 8 or 9, wherein the non-micellar protein is denatured through one or more of: hydrolysis, heat treatment, homogenization, or reaction with soluble divalent minerals.

11. A low viscosity, high caloric density liquid nutritional composition according to any one of claims 8-10, wherein the anti-foaming agent is present in an amount between 0.6 and 6% by weight of the nutritional composition.

12. A low viscosity, high caloric density liquid nutritional composition according to any one of claims 8-10 where the anti-foaming agent is simethicone, dimethylpolysiloxane or silicone dioxide and the anti-foaming agent is present in an amount between 0.6 and 6 % by weight of the nutritional composition.

13. A low viscosity, high caloric density liquid nutritional composition according to claim 8, wherein the chelating agent is selected from the group consisting of divalent citrates and divalent phosphates.

14. A low viscosity, high caloric density liquid nutritional composition according to claim 8, wherein the chelating agent is selected from the group consisting of monovalent chelating agents, divalent chelating agents, and combinations thereof.

15. A method for the manufacture of a stable, low viscosity, high caloric density liquid nutritional composition comprising:
a) combining fat and at least one emulsifier selected from the group consisting of lecithin, monoglycerides, diglycerides, polyglycerol esters, milk phospholipids, citric acid esters, datem, emulsifiers with a hydrophilic-lipophilic balance between 5 and 16, and combinations thereof to make a first mixture, wherein the first mixture is free of water;
b) combining 5-20% by weight of the first mixture with water in a ratio of 1:110 to 1:20 to make a second mixture;
c) adding protein comprising non-micellar milk protein and partially hydrolyzed caseinate to the second mixture to make a third mixture, wherein the non-micellar milk protein is selected from the group consisting of non-micellar milk protein isolate, non-micellar milk protein concentrate, and combinations thereof; and
d) combining the third mixture with the remainder of the first mixture to make a fourth mixture,
wherein the fourth mixture is mixed with one or more carbohydrates, vitamins and minerals to produce a liquid nutritional composition having a viscosity of 45-140 cps at 22°C, 8 to 27 grams of protein per 100 mL, 0 to 17 grams of fat per 100 mL, and a total amount of protein and fat of 8-27 grams per 100 mL.

16. A method according to claim 15 wherein the partially hydrolyzed caseinate is selected from the group consisting of sodium caseinate, potassium caseinate, magnesium caseinate, calcium caseinate, and combinations thereof.

17. A method according to claim 15, wherein the protein comprises partially hydrolysed caseinate; 50-75% non-micellar milk protein; and
0-25% by weight of at least one protein selected from the group consisting of: micellar milk protein, non-hydrolyzed caseinate, soy, pea, whey, rice, corn, meat, fish, egg albumen, potato, canola, algal protein, mycoprotein and combinations thereof.

18. A method according to any one of claims 15-17, wherein the emulsifier is lecithin and the lecithin is present in an amount of 0.5 to 5 weight %, based on the total weight of fat

19. A method according to any one of claims 15-17, wherein the nonmicellar protein is denatured through one or more of: hydrolysis, heat treatment, homogenization, or reaction with soluble divalent minerals, and combinations thereof.

20. A method according to any one of claims 15-17, wherein the emulsifier is lecithin and the lecithin is added to the first mixture in an amount of from 0.5 to 2% by weight based on the total weight of fat.

21. The method according to any one of claims 15-17, wherein the final mixture has a viscosity of between 45 and 125 cps.

22. The method according to any one of claims 15-17, wherein the final mixture has a protein content of between 8 and 17 g per 100mL of the final mixture.

## Patentansprüche

1. Flüssige Nahrungs-Zusammensetzung mit niedriger Viskosität und hoher Kaloriendichte, die enthält:
a) Protein in einer Menge von zwischen 8 bis 27 g/ 100 ml der Nahrungs-Zusammensetzung, wobei das Protein umfasst: (i) nicht-mizellares Milchprotein-Isolat, nicht-mizellares Milchprotein-Konzentrat oder beides und (ii) partiell hydrolysiertes Caseinat, wobei das Protein 0 bis 25 Gew.-% Protein von einem partiell hydrolysierten Caseinat, 25 bis 50 Gew.-% Protein, das aus der Gruppe ausgewählt ist, die besteht aus Molkeprotein, Sojaprotein, Erbsenprotein, Kartoffelprotein und Kombinationen davon, und 50 bis 75 Gew.-% nicht-mizellares Milchprotein-Isolat, nicht-mizellares Milchprotein-Konzentrat oder eine Kombination davon umfasst;
b) Fett in einer Menge von zwischen 0 und 17 g/ 100 ml der Nahrungs-Zusammensetzung und
c) mindestens einen Emulgator, der aus der Gruppe ausgewählt ist, die besteht aus Lecithin, Monoglyceriden, Diglyceriden, Polyglycerinestern, Milch-Phospholipiden, Citronensäureestern, DATEM und Emulgatoren mit einem hydrophilen-lipophilen Gleichgewicht zwischen 5 und 16 und Kombinationen davon,
wobei die Nahrungs-Zusammensetzung eine Viskosität von zwischen 45 und 140 cP bei 22°C, eine Kaloriendichte von 200 bis 300 kcal/ 100 ml der Nahrungs-Zusammensetzung aufweist und wobei die gesamte kombinierte Menge von Fett und Protein 8 bis 27 g/ 100 ml der Nahrungs-Zusammensetzung beträgt.

2. Flüssige Nahrungs-Zusammensetzung mit niedriger Viskosität und hoher Kaloriendichte von Anspruch 1, wobei die Zusammensetzung eine Kaloriendichte von 200 bis 240 kcal/ 100 ml der Nahrungs-Zusammensetzung aufweist.

3. Flüssige Nahrungs-Zusammensetzung mit niedriger Viskosität und hoher Kaloriendichte nach Anspruch 1, bei der das nicht-mizellare Protein durch Hydrolyse und/oder Wärmebehandlung und/oder Homogenisierung und/oder Reaktion mit löslichen zweiwertigen Mineralien denaturiert ist.

4. Flüssige Nahrungs-Zusammensetzung mit niedriger Viskosität und hoher Kaloriendichte nach einem der Ansprüche 1 bis 3, bei welcher der Emulgator Lecithin ist und das Lecithin in einer Menge von zwischen 0,5 und 5 Gew.-% vorliegt, bezogen auf die gesamte Menge an Fett in der Nahrungs-Zusammensetzung.

5. Flüssige Nahrungs-Zusammensetzung mit niedriger Viskosität und hoher Kaloriendichte nach Anspruch 4, bei der das Lecithin aus der Gruppe ausgewählt ist, die besteht aus Sojalecithin, Sonnenblumen-Lecithin, Milch-Phospholipid oder Kombinationen davon.

6. Flüssige Nahrungs-Zusammensetzung mit niedriger Viskosität und hoher Kaloriendichte nach Anspruch 4, bei der das Sojalecithin oder Sonnenblumen-Lecithin natürlich, raffiniert oder chemisch modifiziert ist.

7. Flüssige Nahrungs-Zusammensetzung mit niedriger Viskosität und hoher Kaloriendichte nach einem der Ansprüche 1 bis 3, die ferner einen Stabilisator enthält, der aus der Gruppe ausgewählt ist, die besteht aus Octenylbernsteinsäureanhydrid, Gellan-Gummi, Alginat, Pektin, Guargummi, Johannisbrotkernmehl, Konjak, Carboxymethylcellulose, mikrokristalliner Cellulose und Kombinationen davon.

8. Flüssige Nahrungs-Zusammensetzung mit niedriger Viskosität und hoher Kaloriendichte, die enthält:
a) Protein in einer Menge von zwischen 8 bis 27 g/ 100 ml der Nahrungs-Zusammensetzung,
b) Fett in einer Menge von zwischen 0 und 17 g/ 100 ml der N ahrungs- Ergänzung,
c) ein Antischaummittel, ausgewählt aus der Gruppe bestehend aus Simethicon, Dimethylpolysiloxan, Siliciumdioxid, Lecithin, Milchphospholipid und Kombinationen davon; und
d) einen Chelatbildner, der aus der Gruppe ausgewählt ist, die besteht aus einwertigen Chelatbildnern, zweiwertigen Chelatbildnern und Kombinationen davon, in einer Menge von 0,3 Gew. -% bis 0,5 Gew.-%,
wobei das Protein 50 bis 75 Gew.-% nicht-mizellares Milchprotein-Isolat, nicht-mizellares Milchprotein-Konzentrat oder eine Kombination davon und
partiell hydrolysiertes Caseinat in einer Menge von bis zu 50 Gew.-% an partiell hydrolysiertem Caseinat oder bis zu 25 Gew.-% partiell hydrolysiertes Caseinat und 0-25 Gew.-% an wenigstens einem Protein umfasst, das aus der Gruppe ausgewählt ist, die besteht aus mizellarem Milchprotein, nicht-hydrolysiertem Caseinat, Soja, Erbsen, Molke, Reis, Mais, Fleisch, Fisch, Eiklar, Kartoffel, Raps, Algenprotein, Mycoprotein und Kombinationen davon,
wobei die Nahrungs-Zusammensetzung eine Viskosität von zwischen 45 und 140 cP aufweist, wobei die Zusammensetzung eine Kaloriendichte von 200 bis 300 kcal/ 100 ml der NahrungsErgänzung aufweist und wobei die gesamte kombinierte Menge von Fett und Protein 8 bis 27 g/ 100 ml der Nahrungs-Zusammensetzung beträgt.

9. Flüssige Nahrungs-Zusammensetzung mit niedriger Viskosität und hoher Kaloriendichte nach Anspruch 8, bei welcher der Chelatbildner aus der Gruppe ausgewählt ist, die besteht aus Calciumcitrat, Magnesiumcitrat, Magnesiumphosphat, Calciumphosphat, Monocalciumphosphat und Kombinationen davon.

10. Flüssige Nahrungs-Zusammensetzung mit niedriger Viskosität und hoher Kaloriendichte nach Anspruch 8 oder 9, bei der das nicht-mizellare Protein durch Hydrolyse und/oder Wärmebehandlung und/oder Homogenisierung und/ oder Reaktion mit löslichen zweiwertigen Mineralien denaturiert ist.

11. Flüssige Nahrungs-Zusammensetzung mit niedriger Viskosität und hoher Kaloriendichte nach einem der Ansprüche 8-10, bei der das Antischaummittel in einer Menge zwischen 0,6 und 6 Gew.-% der Nahrungs-Zusammensetzung vorliegt.

12. Flüssige Nahrungs-Zusammensetzung mit niedriger Viskosität und hoher Kaloriendichte nach einem der Ansprüche 8-10, bei der das Antischaummittel Simeticon, Dimethylpolysiloxan oder Siliciumdioxid ist und das Antischaummittel in einer Menge zwischen 0,6 und 6 Gew.-% der Nahrungs-Zusammensetzung vorliegt.

13. Flüssige Nahrungs-Zusammensetzung mit niedriger Viskosität und hoher Kaloriendichte nach Anspruch 8, bei welcher der Chelatbildner aus der Gruppe ausgewählt ist, die aus zweiwertigen Citraten und zweiwertigen Phosphaten besteht.

14. Flüssige Nahrungs-Zusammensetzung mit niedriger Viskosität und hoher Kaloriendichte nach Anspruch 8, bei welcher der Chelatbildner aus der Gruppe ausgewählt ist, die aus einwertigen Chelatbildnern, zweiwertigen Chelatbildnern und Kombinationen davon besteht.

15. Verfahren zur Herstellung einer stabilen flüssigen Nahrungs-Zusammensetzung mit niedriger Viskosität und hoher Kaloriendichte, das umfasst:
a) Kombinieren von Fett und mindestens einem Emulgator, der aus der Gruppe ausgewählt ist, die besteht aus Lecithin, Monoglyceriden, Diglyceriden, Polyglycerinestern, Milch-Phospholipiden, Citronensäureestern, DATEM, Emulgatoren mit einem hydrophilen-lipophilen Gleichgewicht zwischen 5 und 16 und Kombinationen davon, zur Erzeugung eines ersten Gemisches, wobei das erste Gemisch kein Wasser enthält;
b) Kombinieren von 5 bis 20 Gew.-% des ersten Gemisches mit Wasser in einem Verhältnis 1:110 bis 1:20 zur Erzeugung eines zweiten Gemisches;
c) Zugeben von Protein, das nicht-mizellares Milchprotein und partiell hydrolysiertes Caseinat umfasst, zu dem zweiten Gemisch zur Erzeugung eines dritten Gemisches, wobei das nicht-mizellare Milchprotein aus der Gruppe ausgewählt ist, die aus nicht-mizellarem Milchprotein-Hydrolysat, nicht-mizellarem Milchprotein-Konzentrat und Kombinationen davon besteht, und
d) Kombinieren des drittes Gemisches mit dem Rest des ersten Gemisches zur Erzeugung eines vierten Gemisches,
wobei das vierte Gemisch mit einem oder mehreren Kohlenhydraten, Vitaminen und Mineralstoffen gemischt wird, um eine flüssige Nahrungs-Zusammensetzung zu erzeugen, die eine Viskosität von 45 bis 140 cP bei 22°C besitzt und 8 bis 27 g Protein/ 100 ml, 0 bis 17 g Fett/ 100 ml und eine Gesamtmenge von Protein und Fett von 8 bis 27 g/ 100 ml aufweist.

16. Verfahren nach Anspruch 15, bei dem das partiell hydrolysierte Caseinat aus der Gruppe ausgewählt wird, die aus Natriumcaseinat, Kaliumcaseinat, Magnesiumcaseinat, Calciumcaseinat und Kombinationen davon besteht.

17. Verfahren nach Anspruch 15, bei dem das Protein umfasst:
partiell hydrolysiertes Caseinat, 50 bis 75 Gew.-% nicht-mizellares Milchprotein und
0 bis 25 Gew.-% mindestens eines Proteins, das aus der Gruppe ausgewählt ist, die besteht aus mizellarem Milchprotein, nicht-hydrolysiertem Caseinat, Soja, Erbsen, Molke, Reis, Mais, Fleisch, Fisch, Eiklar, Kartoffel, Raps, Algenprotein, Mycoprotein und Kombinationen davon.

18. Verfahren nach einem der Ansprüche 15-17, bei dem der Emulgator Lecithin ist und das Lecithin in einer Menge von 0,5 bis 5 Gew.-% vorliegt, bezogen auf das Gesamtgewicht an Fett.

19. Verfahren nach einem der Ansprüche 15-17, bei dem das nicht-mizellare Protein durch Hydrolyse und/oder Wärmebehandlung und/oder Homogenisierung und/oder Reaktion mit löslichen zweiwertigen Mineralien und Kombinationen davon denaturiert ist.

20. Verfahren nach einem der Ansprüche 15-17, bei dem der Emulgator Lecithin ist und das Lecithin in einer Menge von 0,5 bis 2 Gew.-%, bezogen auf das Gesamtgewicht an Fett, zu dem ersten Gemisch zugegeben wird.

21. Verfahren nach einem der Ansprüche 15-17, bei dem das Endgemisch eine Viskosität von zwischen 45 und 125 cP besitzt.

22. Verfahren nach einem der Ansprüche 15-17, bei dem das Endgemisch einen Proteingehalt von zwischen 8 und 17 g/ 100 ml des Endgemisches aufweist.

## Revendications

1. Composition nutritive liquide à faible viscosité et à haute densité calorique comprenant :
a) des protéines en une quantité entre 8 et 27 grammes pour 100 ml de la composition nutritive, les protéines comprenant (i) un isolat de protéines du lait non micellaires, un concentré de protéines du lait non micellaires, ou les deux, et (ii) un caséinat partiellement hydrolysé ; dans laquelle les protéines comprennent de 0 à 25 % en poids de protéines provenant d'un caséinat partiellement hydrolysé ; de 25 à 50 % en poids de protéines choisies dans le groupe constitué des protéines de lactosérum, des protéines de soja, des protéines de pois, des protéines de pomme de terre et des combinaisons de celles-ci ; et de 50 à 75 % en poids d'isolat de protéines du lait non micellaires, de concentré de protéines du lait non micellaires ou d'une combinaison de ceux-ci ;
b) des graisses en une quantité entre 0 et 17 grammes pour 100 ml de la composition nutritive ; et
c) au moins un émulsifiant choisi dans le groupe constitué de la lécithine, des monoglycérides, des diglycérides, des esters de polyglycérol, des phospholipides du lait, des esters de l'acide citrique, des DATEM et des émulsifiants ayant un rapport hydro-lipophile entre 5 et 16, et des combinaisons de ceux-ci ;
dans laquelle la composition nutritive a une viscosité entre 45 et 140 cps à 22°C, une densité calorique de 200 à 300 kcal pour 100 ml de la composition nutritive, et dans laquelle la quantité combinée totale des graisses et des protéines est de 8 à 27 grammes pour 100 ml de la composition nutritive.

2. Composition nutritive liquide à faible viscosité et à haute densité calorique selon la revendication 1, dans laquelle la composition a une densité calorique de 200 à 240 kcal pour 100 ml de la composition nutritive.

3. Composition nutritive liquide à faible viscosité et à haute densité calorique selon la revendication 1, dans laquelle les protéines non micellaires sont dénaturées par un ou plusieurs d'une hydrolyse, d'un traitement thermique, d'une homogénéisation ou d'une réaction avec des minéraux divalents solubles.

4. Composition nutritive liquide à faible viscosité et à haute densité calorique selon l'une quelconque des revendications 1 à 3, dans laquelle l'émulsifiant est de la lécithine et la lécithine est présente en une quantité entre 0,5 et 5 % en poids sur la base de la quantité totale des graisses dans la composition nutritive.

5. Composition nutritive liquide à faible viscosité et à haute densité calorique selon la revendication 4, dans laquelle la lécithine est choisie dans le groupe constitué de la lécithine de soja, de la lécithine de tournesol, des phospholipides du lait, ou des combinaisons de ceux-ci.

6. Composition nutritive liquide à faible viscosité et à haute densité calorique selon la revendication 4, dans laquelle la lécithine de soja ou la lécithine de tournesol est naturelle, raffinée ou modifiée chimiquement.

7. Composition nutritive liquide à faible viscosité et à haute densité calorique selon l'une quelconque des revendications 1 à 3 comprenant en outre un stabilisant choisi dans le groupe constitué de l'anhydride octényl succinique, de la gomme gellane, de l'alginate, de la pectine, de la gomme de guar, de la gomme de caroube, du konjac, de la carboxyméthyl cellulose, de la cellulose microcristalline, et des combinaisons de ceux-ci.

8. Composition nutritive liquide à faible viscosité et à haute densité calorique comprenant :
a) des protéines en une quantité entre 8 et 27 grammes pour 100 ml de la composition nutritive ;
b) des graisses en une quantité entre 0 et 17 grammes pour 100 ml du complément nutritionnel ;
c) un antimousse choisi dans le groupe constitué de la siméthicone, du diméthylpolysiloxane, du dioxyde de silicium, de la lécithine, des phospholipides du lait, et des combinaisons de ceux-ci ; et
d) un agent chélatant choisi dans le groupe constitué des agents chélatants monovalents, des agents chélatants divalents, et des combinaisons de ceux-ci ; en une quantité de 0,3 % en poids à 0,5 % en poids ;
où les protéines comprennent : de 50 à 75 % en poids d'un isolat de protéines du lait non micellaires, d'un concentré de protéines du lait non micellaires ou d'une combinaison de ceux-ci ; et
un caséinat partiellement hydrolysé en une quantité d'au plus 50 % en poids d'un caséinat partiellement hydrolysé, ou d'au plus 25 % en poids d'un caséinat partiellement hydrolysé et de 0 à 25 % en poids d'au moins une protéine choisie dans le groupe constitué de : protéines du lait micellaires, caséinat non hydrolysé, protéines de soja, de pois, de lactosérum, de riz, de maïs, de viande, de poisson, d'albumen d'œuf, de pomme de terre, de canola, protéines d'algues, mycoprotéines et combinaisons de ceux-ci ;
dans laquelle la composition nutritive a une viscosité entre 45 et 140 cps à 22°C ;
dans laquelle la composition a une densité calorique de 200 à 300 kcal pour 100 ml du complément nutritionnel ; et dans laquelle la quantité combinée totale des graisses et des protéines est de 8 à 27 grammes pour 100 ml de la composition nutritive.

9. Composition nutritive liquide à faible viscosité et à haute densité calorique selon la revendication 8, dans laquelle l'agent chélatant est choisi dans le groupe constitué du citrate de calcium, du citrate de magnésium, du phosphate de magnésium, du phosphate de calcium, du phosphate de monocalcium, et des combinaisons de ceux-ci.

10. Composition nutritive liquide à faible viscosité et à haute densité calorique selon la revendication 8 ou 9, dans laquelle les protéines non micellaires sont dénaturées par un ou plusieurs de : hydrolyse, traitement thermique, homogénéisation, ou réaction avec des minéraux divalents solubles.

11. Composition nutritive liquide à faible viscosité et à haute densité calorique selon l'une quelconque des revendications 8 à 10, dans laquelle l'antimousse est présent en une quantité entre 0,6 et 6 % en poids de la composition nutritive.

12. Composition nutritive liquide à faible viscosité et à haute densité calorique selon l'une quelconque des revendications 8 à 10 où l'antimousse est de la siméthicone, du diméthylpolysiloxane ou du dioxyde de silicium et l'antimousse est présent en une quantité entre 0,6 et 6 % en poids de la composition nutritive.

13. Composition nutritive liquide à faible viscosité et à haute densité calorique selon la revendication 8, dans laquelle l'agent chélatant est choisi dans le groupe constitué des citrates divalents et des phosphates divalents.

14. Composition nutritive liquide à faible viscosité et à haute densité calorique selon la revendication 8, dans laquelle l'agent chélatant est choisi dans le groupe constitué des agents chélatants monovalents, des agents chélatants divalents, et des combinaisons de ceux-ci.

15. Procédé de fabrication d'une composition nutritive liquide stable à faible viscosité et à haute densité calorique comprenant :
a) la combinaison de graisses et d'au moins un émulsifiant choisi dans le groupe constitué de la lécithine, des monoglycérides, des diglycérides, des esters de polyglycérol, des phospholipides du lait, des esters de l'acide citrique, des DATEM, des émulsifiants ayant un rapport hydro-lipophile entre 5 et 16, et des combinaisons de ceux-ci pour préparer un premier mélange, dans lequel le premier mélange est exempt d'eau ;
b) la combinaison de 5 à 20 % en poids du premier mélange avec de l'eau en un rapport de 1/110 à 1/20 pour préparer un deuxième mélange ;
c) l'ajout de protéines comprenant des protéines du lait non micellaires et un caséinat partiellement hydrolysé au deuxième mélange pour préparer un troisième mélange, dans lequel les protéines du lait non micellaires sont choisies dans le groupe constitué d'un isolat de protéines du lait non micellaires, d'un concentré de protéines du lait non micellaires, et des combinaisons de ceux-ci ; et
d) la combinaison du troisième mélange avec le reste du premier mélange pour préparer un quatrième mélange,
dans lequel le quatrième mélange est mélangé avec un ou plusieurs glucides, vitamines et minéraux pour produire une composition nutritive liquide ayant une viscosité de 45 à 140 cps à 22°C, de 8 à 27 grammes de protéines pour 100 ml, de 0 à 17 grammes de graisses pour 100 ml, et une quantité totale de protéines et de graisses de 8 à 27 grammes pour 100 ml.

16. Procédé selon la revendication 15 dans lequel le caséinat partiellement hydrolysé est choisi dans le groupe constitué d'un caséinat de sodium, d'un caséinat de potassium, d'un caséinat de magnésium, d'un caséinat de calcium, et des combinaisons de ceux-ci.

17. Procédé selon la revendication 15, dans lequel les protéines comprennent un caséinat partiellement hydrolysé ; de 50 à 75 % de protéines du lait non micellaires ; et
de 0 à 25 % en poids d'au moins une protéine choisie dans le groupe constitué de : protéines du lait micellaires, caséinat non hydrolysé, protéines de soja, de pois, de lactosérum, de riz, de maïs, de viande, de poisson, d'albumen d'œuf, de pomme de terre, de canola, protéines d'algues, mycoprotéines et combinaisons de ceux-ci .

18. Procédé selon l'une quelconque des revendications 15 à 17, dans lequel l'émulsifiant est de la lécithine et la lécithine est présente en une quantité de 0,5 à 5 % en poids, sur la base du poids total des graisses.

19. Procédé selon l'une quelconque des revendications 15 à 17, dans lequel les protéines non micellaires sont dénaturées par un ou plusieurs de : hydrolyse, traitement thermique, homogénéisation, ou réaction avec des minéraux divalents solubles, et des combinaisons de ceux-ci.

20. Procédé selon l'une quelconque des revendications 15 à 17, dans lequel l'émulsifiant est de la lécithine et la lécithine est ajoutée au premier mélange en une quantité de 0,5 à 2 % en poids sur la base du poids total des graisses.

21. Procédé selon l'une quelconque des revendications 15 à 17, dans lequel le mélange final a une viscosité entre 45 et 125 cps.

22. Procédé selon l'une quelconque des revendications 15 à 17, dans lequel le mélange final a une teneur en protéines entre 8 et 17 g pour 100 ml du mélange final.
